# EUROPEAN PATENT APPLICATION

(11) **EP 1 850 616 A1**
(43) Date of publication of application: **31.10.2007**
(21) Application number: 06113283.3
(22) Date of filing: 28.04.2006
(51) Int. Cl.: H04Q 7/38

(54) **Method for optimizing the reading by a user equipment of MCCH (MBMS point-to-multipoint control channel) information**

(71) Applicant: Nec Technologies (UK) Limited, Reading, Berkshire RG2 0TD (GB)
(72) Inventor: Roger, Vincent, 92800 Puteaux (FR)
(74) Representative: Poulin, Gérard

(57) **Abstract**

The invention relates to a method for optimizing the reading by a User Equipment (UE) of MCCH (MBMS Point-to-Multipoint Control Channel) information transmitted periodically to said UE by a Radio Network Controller (RNC) in cellular communication network during a Modification Period (MP) comprising a number of Repetition Periods (RP) during which a same MCCH information is transmitted to the UE.

According to the invention, the network transmits to the UE the number NumModifiedNCells of MBMS Neighbor Cell Point-to-Multipoint Radio Bearer Information messages NCs informing the UE about the Point-to-Multipoint Radio Bearer configuration used in neighbor cells where combining applies and which are located in the Modified MCCH Information (6) using the MSI message.

## Description

### TECHNICAL DOMAIN

The present invention relates to MBMS (Multimedia Broadcast/Multicast Service) and concerns specifically a method for optimizing the reading by a User Equipment (UE) of MCCH (MBMS point-to-multipoint Control Channel) information transmitted periodically to said UE by a Radio Network Controller (RNC) in cellular communication network during a Modification Period (MP) comprising a number of Repetition Periods (RP) during which a same MCCH information is transmitted to the UE, wherein the MCCH information comprise:
- Modified MCCH Information composed of one MBMS Modified Services Information message, called MSI in the sequel, that informs the UE about any change applicable for one or more MBMS services available in the current cell and possibly in neighbor cells, said MSI message is followed by Point-to-Multipoint Radio Bearer Information (PTM RB info) messages informing the UE about the PTM RB configuration in current and neighbor cells necessary for the UE to build the resource for receiving the MBMS traffic related to the new or modified services, and
- Unmodified MCCH Information composed of one MBMS Unmodified Services Information message, called USI in the sequel, that informs the UE about the MBMS services available in the current cell and possibly in neighbor cells, that have not changed compared to previous Modification Period, said USI message is followed by PTM RB info messages informing the UE about the PTM RB configuration in current and neighbor cells necessary for the UE to build the resource for receiving the MBMS traffic related to the unmodified services.

The invention concerns a user equipment comprising means for optimizing the reading of the MCCH information transmitted by the Radio Network Controller (RNC).

The invention concerns also a RNC comprising means for optimizing the reading of MCCH information transmitted to the UE.

### STATE OF PRIOR ART

MBMS (Multimedia Broadcast/Multicast Service) is a unidirectional point-to-multipoint service defined by 3GPP (Third Generation Group Partnership Project (Release 6)) in which data is transmitted from a single source entity to multiple recipients. To implement such service, MBMS control information is provided by the network in a MCCH (MBMS Point-to-Multipoint Control Channel) which is a new logical channel dedicated to MBMS purpose that informs about available MBMS services in the cell and about the neighbor cells that may be used for combining.

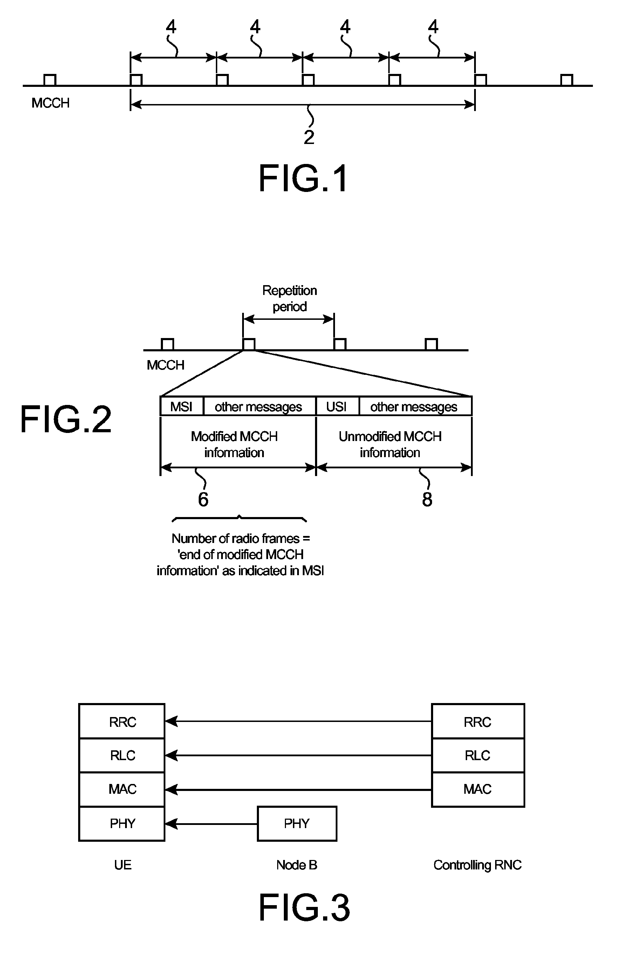

The information on MCCH is transmitted using a fixed schedule, which is common for all services, as illustrated in figure 1.

As shown in figure 1, the fixed schedule comprises a Modification Period MP 2 composed of several Repetition Periods (RP) 4. A modification of MCCH information (other than MBMS Access Information) can only occur at the beginning of a Modification Period. As a result, a new service or a modified one compared to the previous Modification Period is notified to the UE in the MCCH at the beginning of a Modification Period 2.

During Repetition Periods 4, identical MCCH information within a Modification Period (i.e MCCH information other than MBMS Access Information) is transmitted periodically by the RNC to the UE. This MCCH information is repeated a configurable number of times with exactly the same content. Same RLC PDUs (Radio Link Control Protocol Data Units) from a repetition period are retransmitted in the next repetition period.

It should be noted that the fixed schedule also comprises an additional period, called Access Info Period during which the Network transmits MBMS access information periodically based on the Access Info Period for counting the UEs interested in MBMS services. This Access Info period in MCCH is not described in figure 1.

The repetition of the same MCCH information every repetition period 4 allows the UEs:
- to start reading MCCH at the beginning of a repetition period if the UE detects that it needs to acquire MCCH (e.g. UE enters the cell). The UE does not need to wait the beginning of a Modification Period.
- to combine RLC PDUs received in one repetition period 4 with RLC PDUs from other Repetition Periods 4 of the same Modification Period in case of RLC PDUs reception errors (e.g. bad radio conditions). For example, a MCCH SDU (MCCH Service Data Unit, i.e. MCCH message) segmented into 2 RLC PDUs (RLC PDU1 and RLC PDU2) can be reassembled using RLC PDU1 from Repetition Period 1 (RP1) and RLC PDU2 from Repetition Period 2 (RP2) in case RLC PDU2 was not correctly received in RP1.

Furthermore, within a Repetition Period 4, the MCCH messages are sent in two parts, as described in figure 2. The first part is dedicated to the transmission of Modified MCCH Information, and the second part is dedicated to the transmission of Unmodified MCCH Information.

As shown in figure 2, during a Repetition Period 4, first, the RNC (Radio Network Controller) provides the Modified MCCH Information 6 composed of:
- MSI message representing the MBMS Modified Services Information. This message is transmitted periodically by the RNC of the UTRAN (UMTS Terrestrial Radio Access Network) to inform UE about a change (e.g. start, modification, release...) applicable for one or more MBMS services available in the current cell and possibly in neighbor cells.
- messages that need to be read by the UE due to the content of MSI message and containing Point-to-Multipoint Radio Bearer Information (indicated by PTM RB info in the sequel) necessary for the UE to build the resource for receiving the MBMS traffic related to the new or modified services.

Then, the RNC provides the Unmodified MCCH Information 8 composed of:
- USI message representing the MBMS Unmodified Services Information. This message informs the UE about the MBMS services available in the current cell and possibly in neighbor cells, that have not changed compared to previous Modification Period.
- messages that need to be read by the UE due to the content of USI message and containing PTM RB info necessary for the UE to build the resource for receiving the MBMS traffic related to the unmodified services.

The instant separating the 'Modified MCCH Information' and the 'Unmodified MCCH Information' is provided within MSI message via the 'End of Modified MCCH Information' Information Element.

The PTM RB Info messages are composed of:
- one MBMS COMMON PTM RB info message, called CO in the sequel, intended to inform the UE about the PTM RB configuration information that may be common between different services, applicable in the current and/or in neighbor cells,
- one MBMS CURRENT CELL PTM RB INFORMATION message, called CC in the sequel, intended to inform the UE about the PTM RB configuration used in a particular cell (i.e. the cell where this MCCH information is transmitted), in case one or more MBMS service is provided using PTM RB
- and one or more MBMS NEIGHBOR CELL PTM RB INFORMATION messages, called NC in the sequel, intended to inform the UE about the PTM RB configuration used in neighbor cells to indicate the UE whether or not it may perform selection and/or soft combining.

The messages CO, CC, NC's shall be acquired by the UE in the same Modification Period 2.

In operation, when a new service is started or when an existing service is modified, the UE will be notified via MSI message by the network. If that service is provided using Point-To-Multipoint Radio Bearer, the UE knows that it shall continue acquiring the PTM RB Info messages CC, CO and NCs which are located in the Modified MCCH Information part 6.

Two procedures are available for reading the MCCH, the MCCH Acquisition procedure and MCCH Notification Procedure.

When reading the MCCH, the UE applies whether the MCCH Acquisition procedure or the MCCH Notification Procedure.

The MCCH Acquisition procedure is used by the UE to determine the MBMS services available in the cell and to initiate reception of the services that the UE has joined. As an example, the UE will initiate the MCCH acquisition procedure when entering a new cell or when the user activates a new service. In the case of the MCCH Acquisition, the UE needs to receive both MSI and USI message to discover all the services available in the cell. If the user is interested in a service available in the cell, it also needs to read PTM RB info messages related to that service.

The MCCH Notification procedure is used by the UE to respond to a notification provided by UTRAN, indicating a change applicable for one or more MBMS services the UE has joined. The Notification procedure is used by the UE after a MCCH Acquisition procedure to detect any change (new service or modification to an existing service) in the service activated by the user. In the case of MCCH Notification, the UE will only need to acquire MSI message to detect if a service activated by the user is newly started or modified. If the user is interested in a modified service available in the cell, the UE also needs to read the modified MCCH information part 6 for receiving the PTM RB info messages related to that service.

Figure 3 illustrates the communication between the corresponding layers in the UTRAN and in the UE.

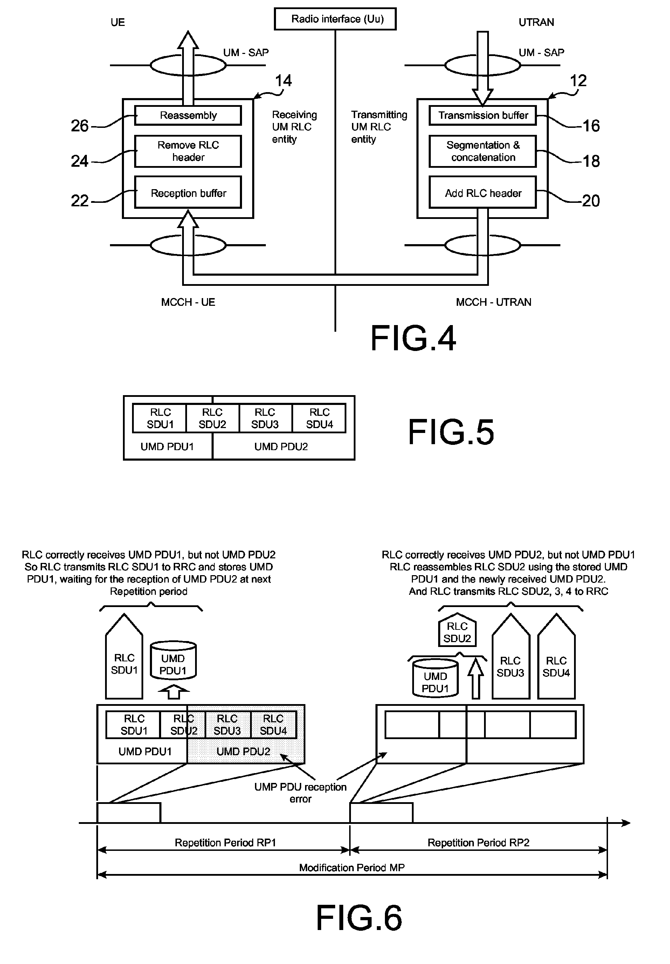

The MCCH messages are transmitted from the RRC (Radio Resource Control) of the UTRAN to RRC of the UE through the RLC (Radio Link Control) layer. The RLC entity of the UTRAN and the RLC entity of the UE are configured in unacknowledged mode as shown in figure 4 illustrating the MCCH flow between the UTRAN and the UE.

As shown in figure 4, at the UTRAN side, the RLC SDU (for Radio Link Control Service Data Units) composing the MCCH messages are provided by the UM-SAP 10 (Unacknowledged Mode-Service Access Point) to a transmitting UM-entity 12 and transmitted through a Radio Interface (Uu) to a receiving UM-entity 14.

The transmitting UM-entity 12 comprises, a first stage consisting of a transmission buffer 16, a second stage consisting of segmentation and concatenation module 18 and a third stage 20 which adds RLC header to produce the RLC PDU.

The receiving UM-entity 14 comprises a first stage 22 consisting of a reception buffer, a second stage 24 which removes the RLC header from the RLC PDU, and third stage 26 consisting of a reassembly unit.

As illustrated in figure 5, the transmitting UM RLC entity 12 segments the RLC SDU (MCCH messages) into UMD PDUs (for Unacknowledged Mode Protocol Data Units). The UMD PDU may contain segmented and/or concatenated RLC SDUs.

In the example of figure 5, RLC SDU2 is segmented in two parts, one part is contained within UMD PDU1 and the second part is contained within UMD PDU2. RLC SDU3 and RLC SDU4 are concatenated within UMD PDU2. The receiving UM-RLC entity receives UMD PDUs and reassembles the RLC SDUs.

The receiving RLC entity 14 is configured for MCCH reception with 'Out of Sequence Delivery', i.e. it will reassemble SDUs and transfer them to the upper layers as soon as all PDUs that contain the SDU have been received even if earlier PDUs have not yet been received due to RLC PDUs reception errors.

As illustrated in figure 6, in case of RLC PDUs reception errors, UMD PDUs received in one Repetition Period RP1 and associated to RLC SDUs not yet reassembled will be stored by the receiving UM-RLC entity 14 and combined with PDUs containing these SDUs received in next Repetition Periods RP2. In the example provided in figure 6, UMP PDU1 is received correctly in RP1. RLC transmits RLC SDU1 to RRC. But RLC cannot reassemble RLC SDU2 so RLC stores UMD PDU1. Then at the next Repetition Period RP2, RLC receives RLC PDU2 correctly. Using the stored UMD PDU1, RLC can reassemble RLC SDU2 and transmit to RRC. RLC also transmits RLC SDU3 and SDU4 contained in UMD PDU2 to RRC.

MCCH reading with RLC PDUs reception errors occurs when RLC PDUs cannot be received by the RLC entity 14 at the UE. This may happen for example when the UE does not read MCCH for some duration due to higher priority tasks or when the radio reception conditions are poor, leading to erroneous CRC (Cyclic Redundancy Check) associated to the Transport Block containing UMD PDUs.

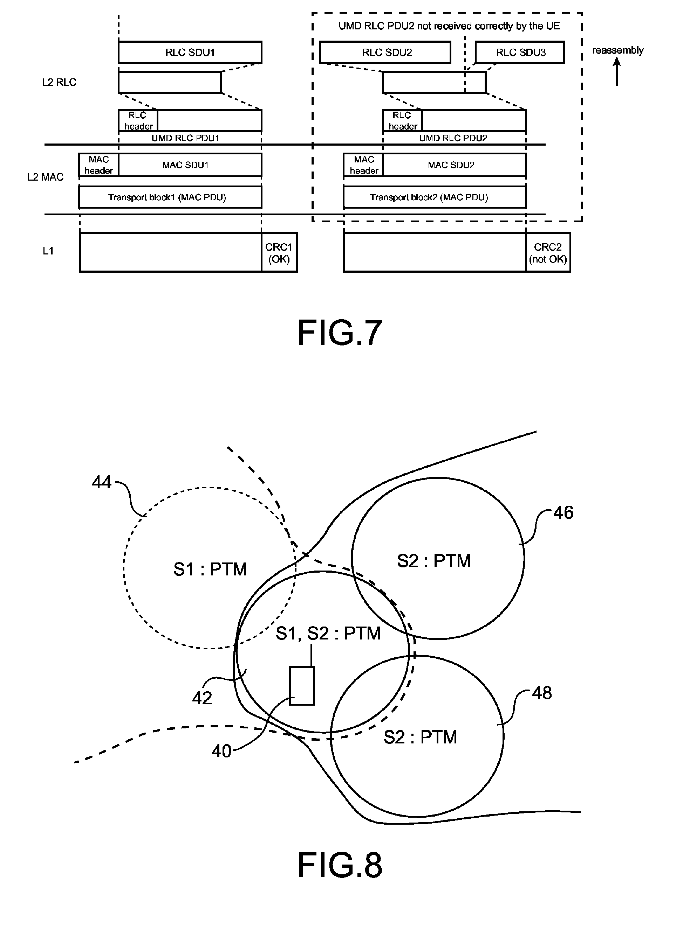

Such problem is illustrated by figure 7 where UMD RLC PDU 2 will not be received by the UE. In this case, the UE does not know if the UMD PDU not received is a PDU related to MCCH channel or to another channel.

In this context, when the UE operates the MCCH Notification procedure, the UE is only interested by services that have changed and are notified in MSI message. If the user is interested in a service that is started, the UE will detect that a session for this service is started through the MSI message and if the session is provided via Point-to-Multipoint Radio Bearer (PTM RB), the UE shall also read the Modified MCCH Information to acquire the PTM RB information messages CO, CC and the NC's messages related to this service.

It should be noted that in current 3GPP specification, the UTRAN informs the UEs about the total number of MBMS NEIGHBOR CELL PTM RB INFO messages NCs in the repetition period, comprising the number of NCs messages located in both Modified MCCH Information 6 and Unmodified MCCH Information 8. This parameter is called MBMS number of neighbor cells, called NumTotalNcells in the sequel.

It may be possible that the neighbor cell for which combining applies do not transmit the same set of services and therefore, the NC messages may be contained whether in the Modified MCCH Information 6, for new services being started in some of the neighbor cell where combining applies, or in the Unmodified MCCH Information, for services already ongoing in the neighbor cells where combining applies.

Since the UE is only interested in the new services, and therefore only needs to acquire the NC messages contained in the Modified MCCH Information 6, the UE could save power consumption if it could determine whether all the required MCCH Information (MCCH messages MSI, CO, CC, NC's for the new/modified service has been correctly received). However, when RLC PDU reception error occurs, the UE cannot determine if the missing RLC PDUs contain any (fragments of) RLC SDUs corresponding to additional NC messages belonging to the required MCCH Information not yet received by the UE or if the missing RLC PDUs are related to any other RLC SDUs.

The object of the invention is to overcome the above described drawbacks in order to reduce the time spent by the UE for reading MBMS control information when an RLC PDUs (Radio Link Control Protocol Data Units) reception error occurs.

### PRESENTATION OF THE INVENTION

The invention proposes a method for optimizing the reading by a User Equipment (UE) of MCCH (MBMS Point-to-Multipoint Control Channel) information transmitted periodically to said UE by a Radio Network Controller (RNC) in cellular communication network during a Modification Period (MP) comprising a number of Repetition Periods (RP) during which a same MCCH information is transmitted to the UE, wherein the MCCH information comprise:
- Modified MCCH Information composed of one MBMS Modified Services Information message MSI that informs the UE about any change applicable for one or more MBMS services available in the current cell and possibly in neighbor cells, said MSI message is followed by Point-to-Multipoint Radio Bearer Information (PTM RB info) messages informing the UE about the PTM RB configuration in current and neighbor cells necessary for the UE to build the resource for receiving the MBMS traffic related to the new or modified services, and
- Unmodified MCCH Information composed one of MBMS Unmodified Services Information message USI that informs the UE about the MBMS services available in the current cell and possibly in neighbor cells, that have not changed compared to previous Modification Period, said USI message is followed by PTM RB info messages informing the UE about the PTM RB configuration in current and neighbor cells necessary for the UE to build the resource for receiving the MBMS traffic related to the unmodified services.

In order to allow the UE to determine whether all the required MCCH Information including MCCH messages MSI, CO, CC, NC's for the new/modified service has been correctly received, the RNC further transmits to the UE the number NumModifiedNCells of MBMS Neighbor Cell Point-to-Multipoint Radio Bearer Information messages NCs informing the UE about the Point-to-Multipoint Radio Bearer configuration used in neighbor cells and which are located in the Modified MCCH Information using the MSI message.

According to the invention, said Point-to-Multipoint Radio Bearer Information messages comprises:
- at least one MBMS Common Point-to-Multipoint Radio Bearer Information message CO that informs the UE about the Point-to-Multipoint Radio Bearer configuration information that may be common between different services, applicable in the current and/or in the neighbor cells,
- at least one MBMS Current Cell Point-to-Multipoint Radio Bearer Information message CC that informs the UE about the Point-to-Multipoint Radio Bearer configuration used in a cell, in case one or more MBMS service is provided in said cell,
- at least one MBMS neighbor cell Point-to-Multipoint Radio Bearer Information message NC that informs the UE about the Point-to-Multipoint Radio Bearer configuration used in neighbor cell, in case one or more MBMS service is provided in said cell.

The method according to the invention provides an optimized procedure for reading the MCCH information if RLC PDUs reception errors occurs, i.e., when RLC PDUs cannot be received by the RLC entity at the UE when the UE operates the MCCH Notification procedure.

Knowing the number NumModifiedNCells, the UE can stop reading the Modified MCCH Information as soon as all required MCCH Information has been acquired.

Thanks to the invention, the UE will save power consumption as soon as the UE detects that all the required MCCH Information (MCCH messages MSI, CO, CC, number of NC's in Modified MCCH Information for the new/modified service) has been correctly received.

It is the responsibility of the UTRAN (RNC) to provide this information to the UEs.

The network implementing this innovation will enable UEs also implementing this solution to save power consumption.

In one particular embodiment of the invention, the number NumModifiedNCells transmitted to the UE the by the RNC is an Integer equal to (0...32).

According to another aspect of the invention, the RNC further transmits to the UE additional information relating to the location of the Point-to-Multipoint Radio Bearer Information within each Repetition Period of the current Modification Period needed to be read by the UE. Said additional information indicates to the UE whether or not the CO message is located in the Modified MCCH Information.

The invention concerns also a user equipment and a Radio Network Controller comprising means for implementing the method according to the invention.

The User Equipment according to the invention comprises means for using data received from the RNC for determining the number NumModifiedNCells of MBMS Neighbor Cell Point-to-Multipoint Radio Bearer Information messages NCs and informing the UE about the Point-to-Multipoint Radio Bearer configuration used in neighbor cells and which are located in the Modified MCCH Information using the MSI message.

In a preferred embodiment, the User Equipment further comprises means for determining the location of the required Point-to-Multipoint Radio Bearer Information within each Repetition Period of the current Modification Period from data received from the RNC.

The Radio Network Controller according to the invention comprises:
- means for generating MCCH (MBMS Control Channel) information and transmitting periodically said MCCH information to a UE during a Modification Period (MP) comprising a number of Repetition Periods (RP) during which a same MCCH information is transmitted to the UE wherein the MCCH information comprise:

- modified MCCH Information composed of one MBMS Modified Services Information message MSI that informs the UE about any change applicable for one or more MBMS services available in the current cell and possibly in neighbor cells, said MSI message is followed by Point-to-Multipoint Radio Bearer Information (PTM RB info) messages informing the UE about the PTM RB configuration in current and neighbor cells necessary for the UE to build the resource for receiving the MBMS traffic related to the new or modified services, and
- unmodified MCCH Information composed of one MBMS Unmodified Services Information message USI that informs the UE about the MBMS services available in the current cell and possibly in neighbor cells, that have not changed compared to previous Modification Period, said USI message is followed by PTM RB info messages informing the UE about the PTM RB configuration in current and neighbor cells necessary for the UE to build the resource for receiving the MBMS traffic related to the unmodified services.

Said RNC is characterized in that it comprises means for determining and transmitting to the UE the number NumModifiedNCells of MBMS Neighbor Cells Point-to-Multipoint Radio Bearer Information messages NCs informing said UE about the Point-to-Multipoint Radio Bearer configuration used in neighbor cells and which are located in the Modified MCCH Information using the MSI message.

In a preferred embodiment, the RNC further comprises means for determining and transmitting to said UE the location of the Point-to-Multipoint Radio Bearer Information within each Repetition Period of the current Modification Period needed to be read by the UE.

### BRIEF DESCRIPTION OF THE FIGURES

The forgoing summary, as well as the following detailed description, will be better understood when read in conjunction with the appended figures in which:
- figure 1, discussed above, illustrates the MCCH scheduling structure,
- figure 2, discussed above, illustrate the information transmitted by the UTRAN to the UE during a repetition period,
- figure 3, discussed above, schematically represents the protocol termination for the MCCH,
- figure 4, discussed above, schematically represents the model of two unacknowledged mode RLC peer entities for MCCH,
- figure 5, discussed above, schematically represents the Relation between RLC SDU and UMD PDUs,
- figure 6, discussed above, schematically represents the RLC SDU reassembly procedure at the UE (UMD RLC) over several Repetition Periods,
- figure 7, discussed above, schematically represents an example of RLC UMD PDU reception error,
- figures 8 and 9 schematically represent current and neighbor cells in a cellular communication network and service provision said cells in the context of the invention,
- figure 10 is an example of MCCH Information in the context of the invention,
- figures 11 and 12 illustrate respectively the reception of the MCCH Information by a UE not implementing the method according to the invention and by a UE implementing said method.
- figure 13 is a flow chart illustrating the primary steps of the method according to the invention.

### DETAILED PRESENTATION OF PARTICULAR EMBODIMENTS

Referring now to figure 8, showing a UE 40 camping in a current cell 42, and three neighbor cells 44, 46 and 48.

As illustrated in this figure 8, it is assumed that the user has activated a service S2 and is monitoring the change on MCCH using the MCCH Notification procedure.

It is also assumed that a service S1 is already ongoing via PTM Radio Bearer in current cell 42 and in Neighbor 44 via PTM RB.

Then a session for service S2 is started by the network via PTM RB in current cell 42, Neighbor Cell 46 and Neighbor Cell 48.

Neighbor cells 46 and 48 containing S2 via PTM RB can be used for combining with the current cell 42 and therefore NC messages NC2 and NC3 for these Neighbor cells 46 and 48 are provided in the MCCH of the current cell 42.

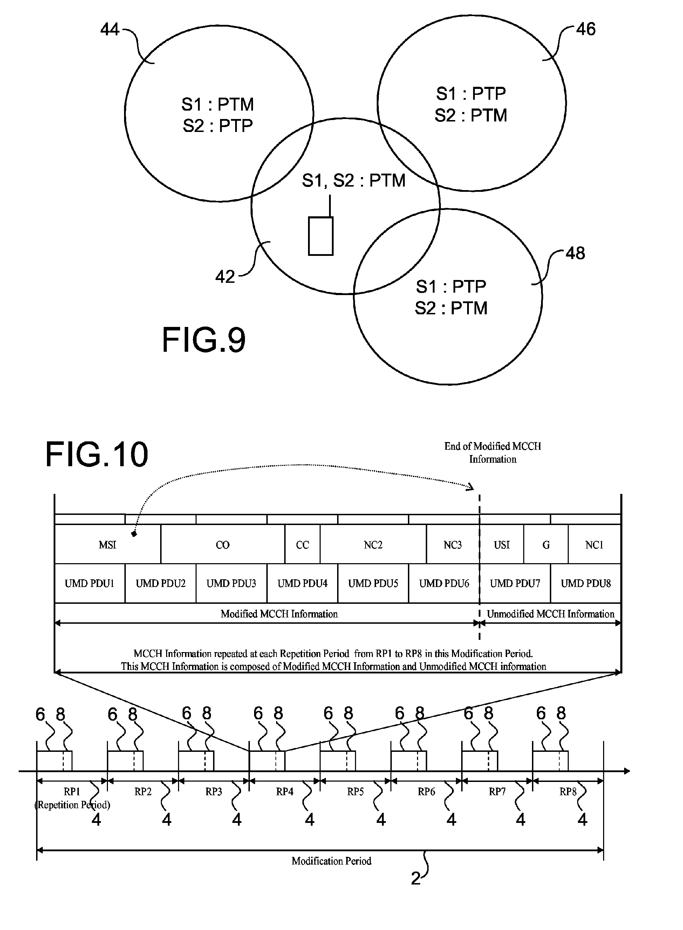

The NC1, NC2 and NC3 messages may not be all located in the Modified MCCH information. This situation can occur for example when service areas for services S1 and S2 are not covering the same cells as shown in figure 8. This situation can also occur for example when the service S1 and the service S2 are provided by different transfer modes as shown in figure 9 where S1 is provided by a PTM (Point-to-Multipoint) Radio Bearer and S2 by PTP (Point-to-point) Radio Bearer in the Neighbor cell 44.

In operation, the network notifies the start of the session for service S2 during a Modification Period 2 by first ordering MCCH Modified MCCH information, consisting of MSI (MBMS MODIFIED SERVICES INFORMATION message) including the service S2 activated by the UE 40, CO (MBMS COMMON CELL PTM RB INFORMATION), CC (MBMS CURRENT CELL PTM RB INFORMATION), NC2 (MBMS NEIGHBOURING CELL P-T-M RB INFORMATION) and NC3 (MBMS NEIGHBOURING CELL P-T-M RB INFORMATION) messages related to service S2.

Then, the network orders Unmodified MCCH information consisting of USI (MBMS UNMODIFIED SERVICES INFORMATION message) including another service S1 not activated by this UE 40, G (MBMS GENERAL INFORMATION), NC1 (MBMS NEIGHBOURING CELL P-T-M RB INFORMATION) message related to service S1.

As illustrated by figure 10, it is assumed that the Modification Period 2 comprises eight Repetition Periods (RP1-RP8) 4 during which the MCCH information are provided to the UE 40.

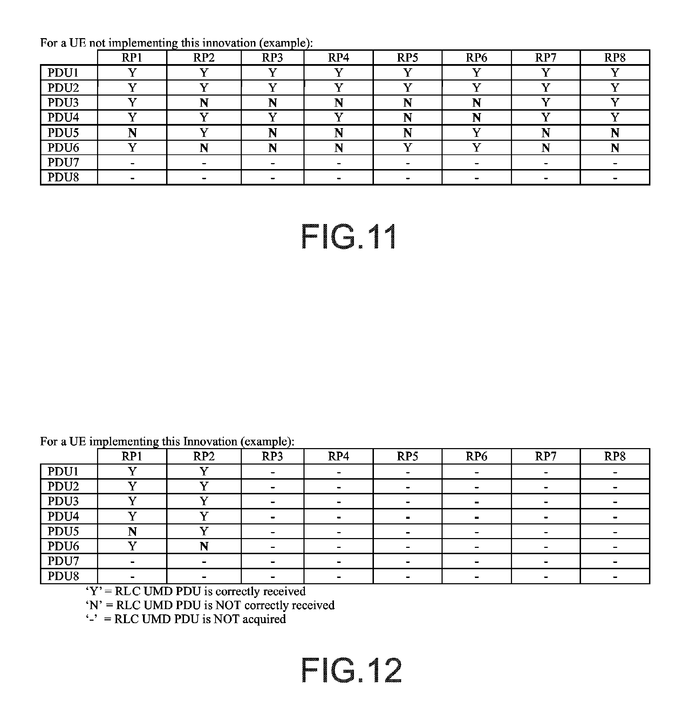

Figure 11 illustrates the reception of the MCCH Information by a UE 40 not implementing the method according to the invention and figure 12 illustrates the reception of the MCCH Information by a UE 40 implementing said method.

In both cases, the UEs have a common starting behavior described below.

In the first Repetition Period RP1, the RLC (Radio Link Layer) of the UE 40 receives correctly UMD PDU1 and UMD PDU2 and transmits MSI message to RRC (Radio Resource Controller) from which it can retrieve the End of Modified MCCH Information. The UE 40 detects that Service S2 is being started. Then, a parameter ('Required UE action') is set to 'Acquire PTM RB' value informing the UE 40 to read the 'Modified MCCH Information' for acquiring the PTM RB information messages, i.e. CO, CC and NCs messages. In the first Repetition Period RP1, the UE RLC also receives correctly UMD PDU3, PDU4 and PDU6 and transmits the messages CO, CC and NC3 to the UE RRC.

According to current 3GPP specification, the UE does not know the number of NC messages in 'Modified MCCH Information' part 6. Hence, when the UE detects a new or modified service in MSI message, it starts reading the Modified MCCH information 6 for acquiring CO, CC, NC(s) messages related to this service. But since the UE does not know how many NC(s) messages are contained in Modified MCCH Information 6, and if some RLC PDUs are not received due to UMD RLC PDUs reception error, the UE will not be able to determine if all the MCCH information has been received correctly. As a result, the UE 40 will continue reading the 'Modified MCCH Information' for each Repetition Period in the current Modification Period for trying to receive any additional `NC' messages, even if all the required MCCH information has already been received.

In Repetition Period RP2, RLC UMD PDU5 is received correctly so the UE (RLC) can reassemble NC2 message using UMD PDU5 from RP2 and UMD PDU4 and PDU6 previously received and stored at RP1 and transmits NC2 to UE's RRC.

In this example, as UE's RRC does not know how many NCs messages shall be acquired from Modified MCCH information, it cannot determine if there is any additional NCs messages not yet received correctly in Modified MCCH Information. So the UE 40 will continue to read the Modified MCCH Information at RP3 and so on, until RP8.

To overcome this problem, the RNC transmits to the UE the number NumModifiedNCells of MBMS Neighbor Cell PTM RB Info messages NCs located in the Modified MCCH Information 6 that informs the UE about the Point-to-Multipoint Radio Bearer configuration used in neighbor cells.

The effect of the implementation of the invention will be now explained by reference to figure 12. In this case, it is assumed that the UE 40 receives NumModifiedNCells = 2 from the network. Then, the UE 40 knows from MSI message received in RP1 that two NCs messages shall be acquired in the Modified MCCH Information.

As only one NC (NC3) is received in RP1, the UE 40 continues to read Modified MCCH Information at RP2 for acquiring an additional NC message.

In Repetition Period RP2, RLC UMD PDU5 is received correctly so the UE RLC can reassemble NC2 message using UMD PDU5 from RP2 and UMD PDU4 and PDU6 previously received and stored at RP1, and transmits NC2 to UE RRC.

Then the UE RRC detects that two NC messages, NC2 and NC3, have been received which corresponds to the number NumModifiedNCells of 'NC's messages in Modified MCCH Information that was indicated in MSI message.

As all required MCCH Information is now acquired, the UE can stop reading MCCH in this Modification Period.

As explained above, contrary to the UE implementing the invention, the UE 40 not implementing the invention unnecessarily reads the 'Modified MCCH Information' between RP3 and RP8 for trying to receive new NCs messages whereas the UE 40 already received at RP2 all the NCs messages provided by the UTRAN in Modified MCCH Information.

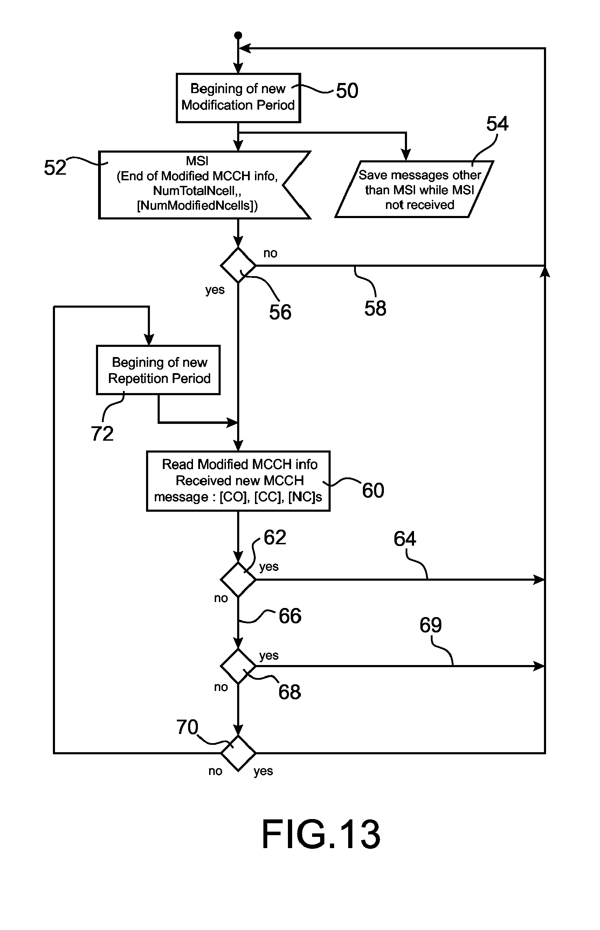

Referring now to figure 13, the primary steps of the method according to the invention are described.

Step 50 denotes the beginning of a new Modification Period.

Step 52 denotes the reception of the MBMS Modified Services Information message MSI.

In step 54, the messages other than MSI are stored while MSI is not received.

Step 56 consist in checking if a new service and/or a modified service is started by the UTRAN.

If neither a new service nor a modified service is started by the UTRAN, the UE 40 scans a new Modification Period (step 50).

Else, at step 60 the UE 40 reads Modified MCCH info and receives new MCCH messages CO, CC, and NCs if associated RLC SDUs can be correctly reassembled by UE RLC.

At step 62, the UE 40 verifies if all the required MCCH Info has been received.

If so (arrow 64), the UE 40 stops reading MCCH in the current Modification Period and waits for the next Modification Period (step 50). In this case, the messages CO, CC have been received and the number of received NCs messages is equal to the NumModified Cells transmitted by the RNC to the UE 40 in the MSI.

The following step 68 is realized if all the NCs messages are provided in the Modified MCCH info (i.e. the particular case where the Unmodified MCCH Information does not include any NC message and therefore the number of NC messages transmitted by the UTRAN in Modified MCCH Information equals NumTotalNCells).

In this case, the UE 40 verifies if all the required MCCH Information has been received.

If so (arrow 69) the UE 40 stops reading MCCH Information in the current Modification Period and waits for the next Modification Period (step 50). In this case, the messages CO, CC have been received and the number of received NCs messages in Modified MCCH Information is equal to the total number of NCs messages NumTotalNCells transmitted by the RNC to the UE 40 in the MSI.

Else, the UE 40 continues reading Modified MCCH Information at each Repetition Period 4 at steps 70 and 72.

Before the last Repetition Period 4, the UE 40 processes the steps 60 to 70.

After the last Repetition Period 4, the UE 40 stops reading MCCH Information in the current Modification Period and waits for the next Modification Period (step 50) .

## Claims

1. Method for optimizing the reading by a User Equipment (UE) of MCCH (MBMS Control Channel) information transmitted periodically to said UE (40) by a Radio Network Controller (RNC) in cellular communication network during a Modification Period (2) comprising a number of Repetition Periods (4) during which a same MCCH information is transmitted to the UE (40), wherein the MCCH information comprise:
- modified MCCH Information composed of MBMS Modified Services Information message MSI that informs the UE (40) about any change applicable for one or more MBMS services available in the current (42) cell and possibly in neighbor cells (44, 46, 48), said MSI message is followed by Point-to-Multipoint Radio Bearer Information (PTM RB info) messages informing the UE about the PTM RB configuration in current and neighbor cells necessary for the UE (40) to build the resource for receiving the MBMS traffic related to the new or modified services, and
- unmodified MCCH Information composed of MBMS Unmodified Services Information message USI that informs the UE (40) about the MBMS services available in the current cell (42) and possibly in neighbor cells (44, 46, 48), that have not changed compared to previous Modification Period (2), said USI message is followed by PTM RB info messages informing the UE about the PTM RB configuration in current and neighbor cells necessary for the UE (40) to build the resource for receiving the MBMS traffic related to the unmodified services,
method **characterized in that** the RNC further transmits to the UE (40) the number NumModifiedNCells of MBMS Neighbor Cell Point-to-Multipoint Radio Bearer Information messages NCs informing said UE (40) about the Point-to-Multipoint Radio Bearer configuration used in neighbor cells (44, 46, 48) and which are located in the Modified MCCH Information (6) using the MSI message.

2. Method according to claim 1 wherein the number NumModifiedNCells is an Integer equal to (0...32).

3. Method according to claim 1 wherein the RNC further transmits to the UE (40) additional information related to the location of the Point-to-Multipoint Radio Bearer Information within each Repetition Period of the current Modification Period (2) needed to be read by the UE.

4. Method according to claim 1 wherein, the Point-to-Multipoint Radio Bearer Information messages comprises:
- at least one MBMS Common Point-to-Multipoint Radio Bearer Information message CO that informs the UE (40) about the Point-to-Multipoint Radio Bearer configuration information that may be common between different services, applicable in the current (42) and/or in the neighbor cells (44, 46, 48),
- at least one MBMS Current Cell Point-to-Multipoint Radio Bearer Information message CC that informs the UE (40) about the Point-to-Multipoint Radio Bearer configuration used in a cell, in case one or more MBMS service is provided in said cell,
- at least one MBMS neighbor cell Point-to-Multipoint Radio Bearer Information message NC that informs the UE (40) about the Point-to-Multipoint Radio Bearer configuration used in neighbor cell, in case one or more MBMS service is provided in said cell (44, 46, 48).

5. Method according to claim 4 wherein the additional information informs the UE (40) about the localization of the CO message in the MSI message.

6. User equipment for communication in a cellular network comprising:
- means for reading MCCH (MBMS Control Channel) information transmitted periodically to said UE (40) by a Radio Network Controller (RNC) in cellular communication network during a Modification Period (2) comprising a number of Repetition Periods (4) during which a same MCCH information is transmitted to the UE (40), wherein the MCCH information comprise:
- modified MCCH Information composed of one MBMS Modified Services Information messages MSI that informs the UE (40) about any change applicable for one or more MBMS services available in the current cell (42) and possibly in neighbor cells (44, 46, 48), said MSI message is followed by Point-to-Multipoint Radio Bearer Information (PTM RB info) messages informing the UE about the PTM RB configuration in current and neighbor cells necessary for the UE (40) to build the resource for receiving the MBMS traffic related to the new or modified services, and
- unmodified MCCH Information composed of one MBMS Unmodified Services Information message USI that informs the UE (40) about the MBMS services available in the current cell (42) and possibly in neighbor cells (44, 46, 48), that have not changed compared to previous Modification Period (2), said USI message is followed by PTM RB info messages informing the UE about the PTM RB configuration in current and neighbor cells necessary for the UE (40) to build the resource for receiving the MBMS traffic related to the unmodified services,
user Equipment **characterized in that** it comprises means for using data received from the RNC for determining the number NumModifiedNCells of MBMS Neighbor Cell Point-to-Multipoint Radio Bearer Information messages NCs and informing the UE (40) about the Point-to-Multipoint Radio Bearer configuration used in neighbor cells (44, 46, 48) and which are located in the Modified MCCH Information (6) using the MSI message.

7. User Equipment according to claim 6 comprising means for determining the location of the required Point-to-Multipoint Radio Bearer Information within each Repetition Period of the current Modification Period (2) from data received from the RNC.

8. Radio Network Controller in cellular communication network comprising:
- means for generating MCCH (MBMS Control Channel) information and transmitting periodically said MCCH information to a UE (40) during a Modification Period (2) comprising a number of Repetition Periods (4) during which a same MCCH information is transmitted to the UE (40) wherein the MCCH information comprise:
- modified MCCH Information composed of one MBMS Modified Services Information message MSI that informs the UE (40) about any change applicable for one or more MBMS services available in the current cell (42) and possibly in neighbor cells (44, 46, 48), said MSI message is followed by Point-to-Multipoint Radio Bearer Information (PTM RB info) messages informing the UE about the PTM RB configuration in current and neighbor cells necessary for the UE (40) to build the resource for receiving the MBMS traffic related to the new or modified services, and
- unmodified MCCH Information composed of one MBMS Unmodified Services Information message USI that informs the UE (40) about the MBMS services available in the current cell (42) and possibly in neighbor cells (44, 46, 48), that have not changed compared to previous Modification Period (2), said USI message is followed by PTM RB info messages informing the UE about the PTM RB configuration in current and neighbor cells necessary for the UE (40) to build the resource for receiving the MBMS traffic related to the unmodified services,
radio Network Controller **characterized in that** it comprises means for determining and transmitting to the UE (40) the number NumModifiedNCells of MBMS Neighbor Cell Point-to-Multipoint Radio Bearer Information messages NCs informing said UE (40) about the Point-to-Multipoint Radio Bearer configuration used in neighbor cells (44, 46, 48) and which are located in the Modified MCCH Information (6) using the MSI message.

9. Radio Network Controller according to claim 8, comprising means for determining and transmitting to said UE (40) the location of the Point-to-Multipoint Radio Bearer Information within each Repetition Period of the current Modification Period (2) needed to be read by the UE.
